# EUROPEAN PATENT SPECIFICATION

(11) **EP 4 176 186 B1**
(45) Date of publication and mention of the grant of the patent: **29.04.2026**
(21) Application number: 21863021.8
(22) Date of filing: 26.08.2021
(51) Int. Cl.: F16J 15/32, F16J 15/3204, F16J 15/3232, F16J 15/3236, E21B 17/05, E21B 21/02, F16J 15/3208, F16L 27/08

(54) **SWIVEL SEAL ASSEMBLY**
SCHWENKDICHTUNGSANORDNUNG
ENSEMBLE JOINT PIVOTANT

(30) Priority: 28.08.2020 US 202063071452 P; 25.08.2021 US 202117445881
(43) Date of publication of application: 10.05.2023
(73) Proprietor: Trelleborg Sealing Solutions Germany GmbH, 70565 Stuttgart (DE)
(72) Inventor: QUIGLEY, Katherine A., Bloomfield, Indiana 47424 (US); MOUNTZ, John J., Smithville, Tennessee 37166 (US)
(74) Representative: Kohler Schmid Möbus Patentanwälte
(86) International application number: PCT/US2021/071293
(87) International publication number: WO 2022/047484

(56) References cited:
- WO-A1-2012/102250
- FR-A- 1 295 755
- JP-A- 2001 336 487
- US-A- 2 815 973
- US-A- 3 271 038
- US-A- 4 626 003
- US-A1- 2006 076 209
- US-A1- 2016 018 002
- US-A1- 2019 011 066
- US-A1- 2019 093 437
- US-A1- 2019 331 223
- US-A1- 2019 368 614

## Description

### CROSS-REFERENCE TO RELATED APPLICATIONS

This International application claims priority to U.S. Utility Application No. 17/445,881 filed August 25, 2021, and U.S. Provisional Application No. 63/071,452 filed on August 28, 2020.

### DESCRIPTION:

### FIELD OF THE INVENTION

The present invention generally relates to swivel seal assemblies. More particularly, the present invention relates to a composite seal for a swivel seal assembly having a novel elastomer ring bonded to at least one anti-extrusion ring.

### BACKGROUND OF THE INVENTION

As is known in the prior art, such as from U.S. Patent 10,619,774, swivel joints are commonly used in the oilfield industry to build rigid yet dynamically configurable flow lines between various pieces of equipment. For example, in oilfield pumping stimulation operations, or fracking operations, swivel joints are often used to connect a number of high-pressure pumping units to a manifold and to connect the manifold to an injection wellhead.

These types of swivel joints typically comprise a tubular male member which is rotatably connected to a tubular female member. The male member comprises a male race and the female member comprises a female race which is configured to be receive the male race. When the male race is positioned in the female race, each of a plurality of outer annular grooves on the male race is aligned with a corresponding inner annular groove on the female race to thereby form plurality of bearing races within which a plurality of bearing balls are received to rotatably connect the male member to the female member.

When the male and female members are connected together, an annulus is formed between the male and female races which is in fluid communication with the flow bore defined by the swivel joint. In order to contain the fluid within the flow bore while still allowing the male and female members to rotate relative to each other, the swivel joint usually includes a dynamic primary seal which is positioned between a nose portion of the male race and an inner end portion of the female race.

However, if the primary seal fails, the flow of pressurized fracking fluid through the annulus can quickly erode the male nose portion and/or the female inner end portion and thereby cause the swivel joint to fail. Also, pressurized fluid will enter the annulus and generate hydrostatic end loads between the male and female races which could cause the bearing races to fail. Therefore, it is common practice to include a second seal to prevent overall assembly failure if the primary seal is breached. A prior art swivel joint with composite seal is known from e.g. US 2019 011 066 A1. However, it remains desirable if a better design of the seal were obtained. Furthermore, it is desirable that such an improved seal could negate the need for a secondary seal, such that assembly costs and complication could be reduced.

Accordingly, there still exists a need for an improved seal. The present invention fulfills these needs and provides other related advantages.

### SUMMARY OF THE INVENTION

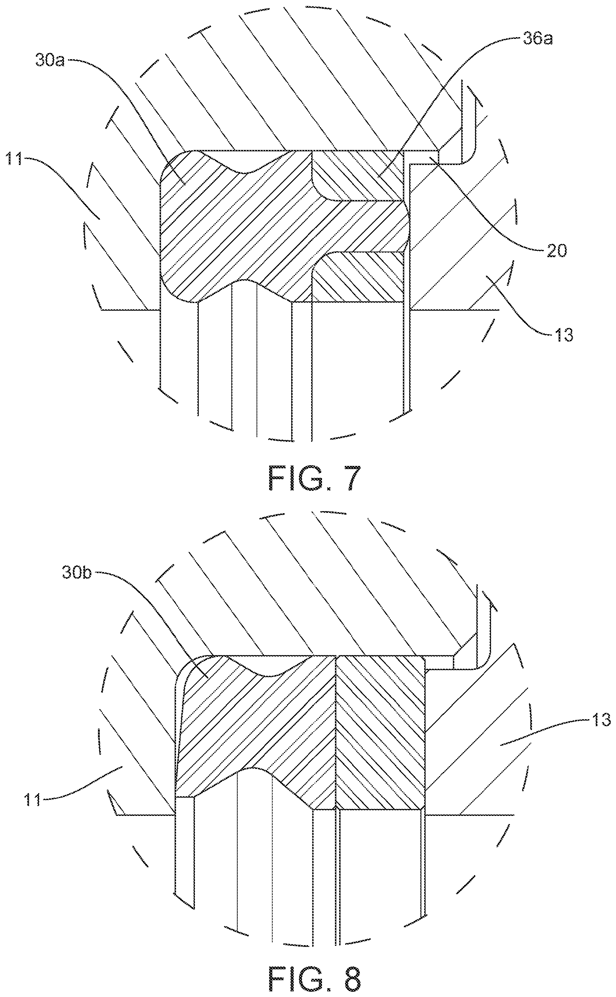

The composite seal configured for a swivel assembly, according to the invention is defined in claim 1. Referring now to the drawings, and more particularly to FIGURES 7 and 8, an exemplary embodiment of a swivel seal assembly provided according to the present invention is illustrated. The swivel seal assembly may be configured for axial sealing and, when installed, bear against a metal surface and cover a preexisting extrusion gap between mating hardware. The swivel seal assembly includes an elastomer seal body that is coupled with an anti-extrusion device that is configured to reduce extrusion of the seal body into the extrusion gap when pressure is applied to the seal body. The swivel seal assembly may be used, for example, in systems where oil and high-pressure gas are present, such as hydraulic fracturing applications. The swivel seal assembly may be installed and operated without the need for interim adjustments or lubrication.

The seal body may be in the shape of an annular ring, as illustrated, and formed of a suitable elastomer, such as rubber or another type of elastic polymer. As best illustrated in the cross-sectional views, the seal body has an outer diameter surface corresponding to an outer diameter and an inner diameter surface corresponding to an inner diameter. In the illustrated embodiments, the outer diameter of the seal body may vary between 85.8 mm and 86.0 mm and the inner diameter of the seal body may be 73.74 mm, giving a maximum thickness of the seal body of approximately 6.2 mm. It should be appreciated that these values may be varied, depending on the dimensions of the gland in which the seal body is installed.

Referring now to FIG. 7, the outer diameter surface and the inner diameter surface may be mirror images of one another. The outer diameter surface and the inner diameter surface each have a first sealing interface formed adjacent to an exposed axial face of the seal body and a second sealing interface formed adjacent to the anti-extrusion device. The seal body may have a section of non-linearly variable thickness between the exposed axial face and the first sealing interface where the seal body varies in thickness in an axial direction from the exposed axial face to the first sealing interface. A third sealing interface between the anti-extrusion device and the second sealing interface extends from the elastomer body to the mating surface and provides increased seal ability. The thickness of the seal body may vary in a non-linear fashion in the section of non-linearly variable thickness to provide the outer diameter surface and the inner diameter surface a rounded profile in the section of non-linearly variable thickness. A pair of sections of linearly variable thickness may be provided between the section of non-linearly variable thickness and the second sealing interface. The sections of linearly variable thickness represent sections of the seal body where the thickness of the seal body varies linearly in the axial direction toward a region of minimal thickness. The region of minimal thickness includes a rounded valley where the thickness of the seal body is a minimum, which allows compressibility and increases seal ability across a range of axial groove widths. The first seal interface and the second seal interface may, on the other hand, represent the regions of the seal body where the thickness is at a maximum to seal against a gland when installed.

To reduce the risk of the seal body extruding into an extrusion gap, the anti-extrusion device may include a pair of backup rings that are bonded to the seal body and may reside against the sealing interface. The backup rings may be formed of a material that has a greater rigidity than the seal body, including but not limited to metal, such as stainless steel, and/or a rigid polymer, such as polyether ether ketone (PEEK). In some embodiments, the backup rings comprise the same material, but it should be appreciated that the backup rings may be formed of different materials.

Each backup ring may abut against a rounded axial extension of the seal body so the backup rings clamp the axial extension therebetween. The axial extension may, for example, define an axial length that is greater than its thickness. The axial extension may have an axial length that is slightly greater than a corresponding axial length of each backup ring so that the axial extension has a portion that extends axially further than an exposed axial face of both backup rings. In this respect, the backup rings may define a gap therebetween that is substantially filled by the axial extension of the seal body, with the portion of the axial extension extending out of the gap. In this respect, the portion of the axial extension that extends out of the gap can also contact part of the gland in which the swivel seal assembly is disposed. The exposed axial faces of the seal body and the backup rings may extend generally in parallel, as illustrated.

The rounded axial extension of the seal body will compress during assembly of the male and female tubular members. Once installed, the rounded axial extension of the seal will be in-line with the backup rings therefore all axial faces of the seal will be in full contact with mating groove surface eliminating any gap.

A total axial length of the swivel seal assembly may be between 9.93 mm and 10.13 mm, with the seal body having a face-to-face axial length of approximately 6.1 mm and the backup rings having an axial length of approximately 3.7 mm. In some embodiments, the axial length of the backup rings may be a fraction of the total length of the seal, such as one-third to one-half the total length of the seal. The portion of the axial extension that extends past the backup rings may have an axial length of approximately 0.1 mm to 0.3 mm. The swivel seal assembly may define a total thickness of between 6.0 mm and 6.2 mm. It should be appreciated that these dimensions are exemplary only, and the dimensions may be varied to different applications and gland dimensions.

Referring now to FIG. 8, another exemplary embodiment of a swivel seal assembly provided according to the present invention is illustrated. The swivel seal assembly of FIG. 8 also includes an elastomer seal body bonded to an anti-extrusion device, similar to the previously described swivel seal assembly. The seal body and the anti-extrusion device may both have an annular ring shape, as illustrated, but the shape of either element may be adjusted to fit the gland in which the swivel seal assembly is installed. The exemplary swivel seal assembly may have an overall outer diameter between 85.37 mm and 86.39 mm and an inner diameter of 73.69 mm. It should be appreciated that these values may be varied depending on the application and dimensions of the gland in which the swivel seal assembly is installed.

Unlike the previously described seal body illustrated in FIG. 7, the seal body of the swivel seal assembly illustrated in FIG. 8 has an inner diameter surface and an outer diameter surface that are not mirror images of one another with a plurality of variable thickness sections. The seal body may include an exposed axial face that has a linearly variable thickness. The seal body may have a first section of variable thickness adjacent to the exposed axial face. In the first section of variable thickness, the inner diameter surface defines a relatively flat surface while the outer diameter surfaces defines a surface with a rounded profile. In a second section of variable thickness adjacent to the first section of variable thickness, the outer diameter surface may have a rounded profile that extends to a first sealing interface and a linearly tapered profile while the inner diameter surface has a linearly tapered profile throughout the second section of variable thickness. In a third section of variable thickness, the outer diameter surface may have a linearly tapered profile while the inner diameter surface may have a rounded profile including a plateau defining a region where the inner diameter of the seal body is at a maximum. In a fourth section of variable thickness, the outer diameter surface may have a rounded profile including a valley defining a region where the outer diameter of the seal body is at a minimum and the inner diameter surface may have a rounded profile, which allows compressibility and increases seal ability across a range of axial groove widths. As can be appreciated, the valley of the outer diameter surface and the plateau of the inner diameter surface may be radially offset from one another. In a fifth section of variable thickness, the outer diameter surface and the inner diameter surface may both have a linearly tapered profile that ends at a section of constant thickness adjacent to where the seal body is bonded to the anti-extrusion device.

The anti-extrusion device is provided in the form of a backup ring bonded to an axial face of the seal body. As illustrated, an axial face of the backup ring may be bonded to the axial face of the seal body so the backup ring and the seal body are in face-to-face contact. The thickness of the backup ring may be constant and equal to the thickness of the seal body in the section of constant thickness. Similar to the previously described anti-extrusion device, the backup ring may comprise a material that is more rigid than the elastomeric material of the seal body, including but not limited to a metal such as stainless steel and/or a rigid polymer such as PEEK. The backup ring may be bonded to the seal body in any suitable manner that keeps the backup ring and the seal body together, including but not limited to adhesive bonding and/or heat bonding. The backup ring has an exposed axial face, opposite the axial face that contacts the seal body, that extends generally perpendicular to an inner diameter surface and an outer diameter surface of the backup ring. The exposed axial face of the seal body may extend at an angle, i.e., non-parallel, relative to the exposed axial face of the backup ring, owing to the variable thickness of the exposed axial face of the seal body.

The swivel seal assembly may define a total axial length of between 9.91 mm and 10.16 mm, with the seal body having an axial length of 6.48 mm and the backup ring having an axial length of 3.56 mm. The backup ring may define a constant thickness of between 5.97 mm and 6.22 mm, with the seal body having variable thicknesses in the different sections of variable thickness, as described previously. It should be appreciated that the previously described dimensions are all exemplary only and can be adjusted depending on the application and dimensions of the gland in which the swivel seal assembly is installed.

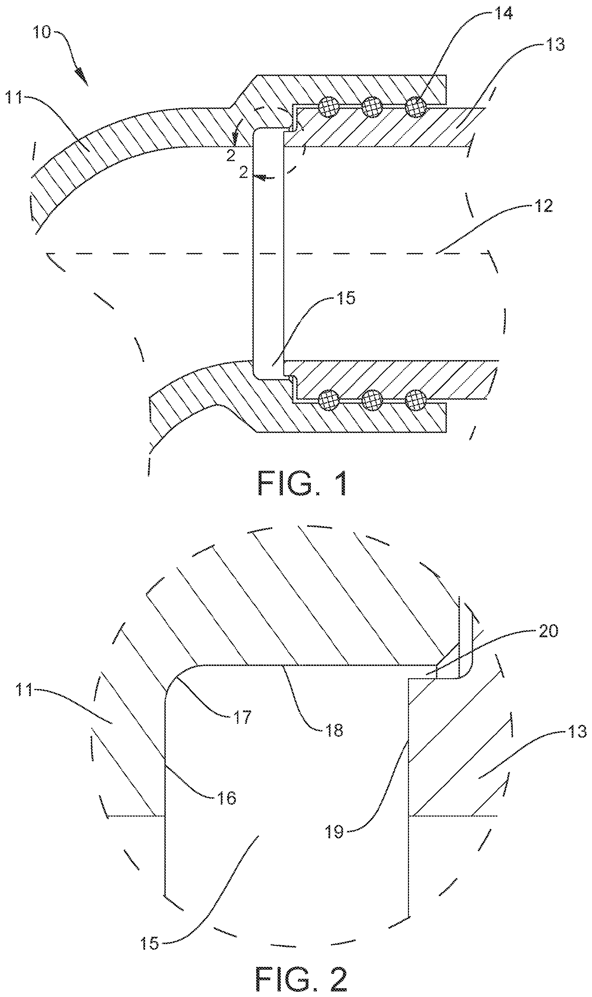

In reference to FIGS. 1-8, a composite seal (30) of the present invention is configured for a swivel seal assembly (10), the swivel seal assembly having a first part (11) rotatable about a longitudinal axis (12) in comparison to a second part (13), wherein the first and second parts cooperatively form an inside annular groove (15) disposed between the first and second parts, the inside annular groove being cylindrically-shaped and aligned about the longitudinal axis, wherein a gap (20) between the first and second parts is connected to the inside annular groove, wherein the composite seal is configured to be disposed within the inside annular groove to seal the gap, wherein the composite seal is configured to be aligned about the longitudinal axis and is delimited by an inside diameter (31) opposite an outside diameter (32) connected by a first axial side (33) opposite a second axial side (34), wherein the composite seal comprises: an elastomeric seal ring (34) bonded to at least one anti-extrusion ring (36), wherein the at least one anti-extrusion ring is disposed at the second axial side configured to be placed adjacent to the gap when the composite seal is disposed within the inside annular groove; wherein the elastomeric seal ring starts from the first axial side and extends longitudinally along the inside and outside diameters until it reaches the at least one anti-extrusion ring; wherein the elastomeric seal ring includes an outside annular valley (37) formed along the outside diameter, the outside annular valley separating a first outside sealing annular interface (38) apart from a second outside sealing annular interface (39), the first outside sealing annular interface disposed adjacent to the first axial side and the second outside sealing annular interface disposed adjacent to the at least one anti-extrusion ring; and wherein the elastomeric seal ring includes an inside annular valley (40) formed along the inside diameter, the inside annular valley separating a first inside sealing annular interface (41) apart from a second inside sealing annular interface (42), the first inside sealing annular interface disposed adjacent to the first axial side and the second inside sealing annular interface disposed adjacent to the at least one anti-extrusion ring,
wherein the first axial side (33) comprises an annular angle (46) with respect to the longitudinal axis (12), the annular angle (46) forming the first axial side (33) that is frustoconical in shape that is sloped downwards towards the outside diameter (32),
   or
wherein the at least one anti-extrusion ring (36) comprises an outer anti-extrusion ring (36a) and an inner anti-extrusion ring (36b) separated by an extension (48) of the elastomeric seal ring (35), wherein the outer anti-extrusion ring (36a) is configured to be placed adjacent to the gap (20) when the composite seal (30a) is disposed within the inside annular groove (15), wherein the extension (48) of the elastomeric seal ring (35) at least partially extends a distance (45) beyond the second axial side (34) of the outer and inner anti-extrusion rings (36a, 36b).

In other exemplary embodiments, a transition (43) between the first axial side and the first outside sealing annular interface may be rounded. The first outside sealing annular interface may be an annular edge (38) formed at an intersection of the rounded transition and the outside annular valley. The second outside sealing annular interface may be cylindrical and may align with the outside diameter.

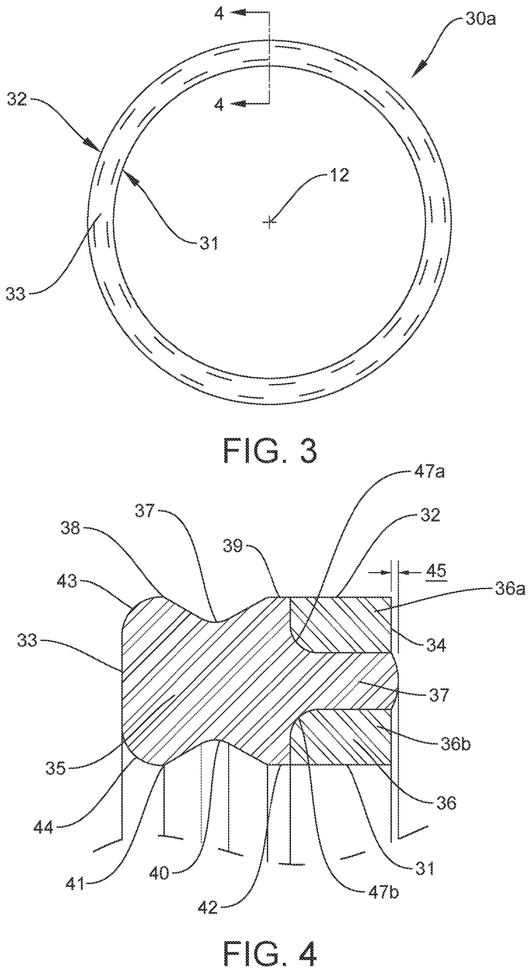

A transition (44 of FIG. 4) between the first axial side and the first inside sealing annular interface may be rounded. The first inside sealing annular interface may be an annular edge (41 of FIG. 4) formed at an intersection of the rounded transition and the inside annular valley.

The second inside sealing annular interface may be cylindrical and aligns with the inside diameter.

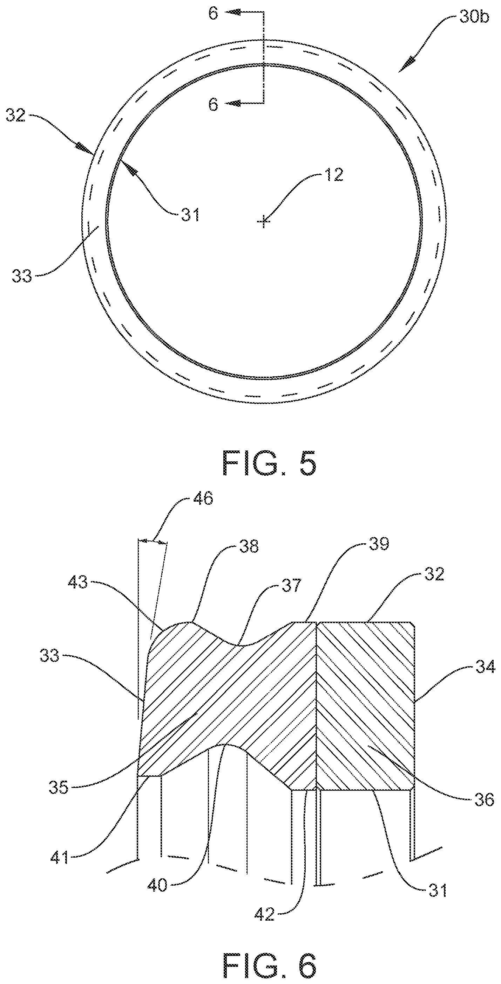

The first inside sealing annular interface (41 of FIG. 6) may be cylindrical and may have a larger diameter in comparison to the inside diameter.

The at least one anti-extrusion ring may comprise an outer anti-extrusion ring (36a of FIG. 4) and an inner anti-extrusion ring (36b of FIG. 4) separated by an extension (37) of the elastomeric seal ring, wherein the outer anti-extrusion ring is configured to be placed adjacent to the gap when the composite seal is disposed within the inside annular groove.

The extension of the elastomeric seal ring then at least partially extends a distance (45) beyond the second axial side of the first and second anti-extrusion rings.

The elastomeric seal ring and the at least one anti-extrusion ring may be formed of different materials. The at least one anti-extrusion ring may be formed of a material having a greater rigidity in comparison to the elastomeric seal ring. The elastomeric seal ring may have a lower modulus of elasticity in comparison to the at least one anti-extrusion ring.

The at least one anti-extrusion ring ma ybe formed from any of the following materials: metal, stainless steel or polyether ether ketone (PEEK).

The first axial side may comprise an annular angle (46 of FIG. 6) with respect to the longitudinal axis, the annular angle forming the first axial side that is frustoconical in shape that is sloped downwards towards the outside diameter.

In another exemplary embodiment, best shown in FIG. 4, a composite seal (30a of FIG. 4) is configured for a swivel seal assembly (10), the swivel seal assembly having a first part (11) rotatable about a longitudinal axis (12) in comparison to a second part (13), wherein the first and second parts cooperatively form an inside annular groove (15) disposed between the first and second parts, the inside annular groove being cylindrically-shaped and aligned about the longitudinal axis, wherein a gap (20) between the first and second parts is connected to the inside annular groove, wherein the composite seal is configured to be disposed within the inside annular groove to seal the gap, wherein the composite seal is configured to be aligned about the longitudinal axis and is delimited by an inside diameter (31) opposite an outside diameter (32) connected by a first axial side (33) opposite a second axial side (34), wherein the composite seal comprises: an elastomeric seal ring (34) bonded to at least one anti-extrusion ring (36), wherein the at least one anti-extrusion ring is disposed at the second axial side configured to be placed adjacent to the gap when the composite seal is disposed within the inside annular groove; wherein the elastomeric seal ring starts from the first axial side and extends longitudinally along the inside and outside diameters until it reaches the at least one anti-extrusion ring; wherein the elastomeric seal ring includes an outside annular valley (37) formed along the outside diameter, the outside annular valley separating a first outside sealing annular interface (38) apart from a second outside sealing annular interface (39), the first outside sealing annular interface disposed adjacent to the first axial side and the second outside sealing annular interface disposed adjacent to the at least one anti-extrusion ring; wherein the elastomeric seal ring includes an inside annular valley (40) formed along the inside diameter, the inside annular valley separating a first inside sealing annular interface (41) apart from a second inside sealing annular interface (42), the first inside sealing annular interface disposed adjacent to the first axial side and the second inside sealing annular interface disposed adjacent to the at least one anti-extrusion ring;
wherein an outside transition (43 of FIG. 4) between the first axial side and the first outside sealing annular interface is rounded; wherein the first outside sealing annular interface is an annular edge (38 of FIG. 4) formed at an intersection of the rounded transition and the outside annular valley; wherein the second outside sealing annular interface is cylindrical and aligns with the outside diameter; wherein an inside transition (44 of FIG. 4) between the first axial side and the first inside sealing annular interface is rounded; wherein the first inside sealing annular interface is an annular edge (41 of FIG. 4) formed at an intersection of the rounded transition and the inside annular valley; wherein the second inside sealing annular interface is cylindrical and aligns with the inside diameter; wherein the at least one anti-extrusion ring comprises an outer anti-extrusion ring (36a) and an inner anti-extrusion ring (36b) separated by an extension (37) of the elastomeric seal ring, wherein the outer anti-extrusion ring is configured to be placed adjacent to the gap when the composite seal is disposed within the inside annular groove; wherein the extension (48) of the elastomeric seal ring (35) at least partially extends a distance (45) beyond the second axial side (34) of the outer and inner anti-extrusion rings (36a, 36b), and wherein the elastomeric seal ring and the at least one anti-extrusion ring are formed of different materials.

The at least one anti-extrusion ring may be formed of a material having a greater rigidity in comparison to the elastomeric seal ring.

In another exemplary embodiment, best shown in FIG. 6, a composite seal (30b of FIG. 6) is configured for a swivel seal assembly (10), the swivel seal assembly having a first part (11) rotatable about a longitudinal axis (12) in comparison to a second part (13), wherein the first and second parts cooperatively form an inside annular groove (15) disposed between the first and second parts, the inside annular groove being cylindrically-shaped and aligned about the longitudinal axis, wherein a gap (20) between the first and second parts is connected to the inside annular groove, wherein the composite seal is configured to be disposed within the inside annular groove to seal the gap, wherein the composite seal is configured to be aligned about the longitudinal axis and is delimited by an inside diameter (31) opposite an outside diameter (32) connected by a first axial side (33) opposite a second axial side (34), wherein the composite seal comprises: an elastomeric seal ring (34) bonded to at least one anti-extrusion ring (36), wherein the at least one anti-extrusion ring is disposed at the second axial side configured to be placed adjacent to the gap when the composite seal is disposed within the inside annular groove; wherein the elastomeric seal ring starts from the first axial side and extends longitudinally along the inside and outside diameters until it reaches the at least one anti-extrusion ring; wherein the elastomeric seal ring includes an outside annular valley (37) formed along the outside diameter, the outside annular valley separating a first outside sealing annular interface (38) apart from a second outside sealing annular interface (39), the first outside sealing annular interface disposed adjacent to the first axial side and the second outside sealing annular interface disposed adjacent to the at least one anti-extrusion ring; and wherein the elastomeric seal ring includes an inside annular valley (40) formed along the inside diameter, the inside annular valley separating a first inside sealing annular interface (41) apart from a second inside sealing annular interface (42), the first inside sealing annular interface disposed adjacent to the first axial side and the second inside sealing annular interface disposed adjacent to the at least one anti-extrusion ring; wherein a transition (43 of FIG. 6) between the first axial side and the first outside sealing annular interface is rounded; wherein the first outside sealing annular interface is an annular edge (38 of FIG. 6) formed at an intersection of the rounded transition and the outside annular valley; wherein the second outside sealing annular interface is cylindrical and aligns with the outside diameter; wherein the second inside sealing annular interface is cylindrical and aligns with the inside diameter; wherein the first inside sealing annular interface (41 of FIG. 6) is cylindrical and has a larger diameter in comparison to the inside diameter; wherein the elastomeric seal ring and the at least one anti-extrusion ring are formed of different materials; and wherein the first axial side comprises an annular angle (46 of FIG. 6) with respect to the longitudinal axis, the annular angle forming the first axial side that is frustoconical in shape that is sloped downwards towards the outside diameter.

In other exemplary embodiments, the at least one anti-extrusion ring may be formed of a material having a greater rigidity in comparison to the elastomeric seal ring.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains, the invention being only limited by the scope of the appended claims. Other features and advantages of the present invention will become apparent from the following more detailed description, when taken in conjunction with the accompanying drawings, which illustrate, by way of example, the principles of the invention.

### BRIEF DESCRIPTION OF THE DRAWINGS

The accompanying drawings illustrate the invention. In such drawings:
FIGURE 1 is a sectional view taken through a simplistic representation of a swivel seal assembly;
FIGURE 2 is an enlarged view of the structure of FIG. 1 taken along lines 2-2;
FIGURE 3 is a front view of a first embodiment of a composite seal of the present invention;
FIGURE 4 is an enlarged sectional view of the structure of FIG. 3 taken along lines 4-4;
FIGURE 5 is a front view of a second embodiment of a composite seal of the present invention;
FIGURE 6 is an enlarged sectional view of the structure of FIG. 5 taken along lines 5-5;
FIGURE 7 is a sectional view of the composite seal of FIG. 4 installed within the structure of FIG. 2; and
FIGURE 8 is a sectional view of the composite seal of FIG. 6 installed within the structure of FIG. 2.

### DETAILED DESCRIPTION OF THE PREFERRED EMBODIMENTS

FIGURE 1 is a sectional view taken through a simplistic representation of a swivel seal assembly 10, where the seal itself has been removed. Actual swivel seal assemblies may be much more complicated in design, but the embodiment shown herein was simplified to help focus the reader on the important aspects of the present invention. The swivel seal assembly has a first part 11 that is rotatable about a longitudinal axis 12 in comparison to a second part 13. A plurality of ball bearings 14 facilitate the smooth rotation between the first and second parts. The ball bearings may be disposed with one, two, three or any number of races as needed by any specific design. Those skilled in the art of swivel joints and sealing will understand that a multitude of variations are possible for such swivel seal assemblies such that no further discussion is needed herein.

FIGURE 2 is an enlarged view of the structure of FIG. 1 taken along lines 2-2 where one can better see that the first and second parts cooperatively form an inside annular groove 15 (i.e. gland) disposed between the first and second parts. The inside annular groove is cylindrically-shaped and aligned about the longitudinal axis. The inside annular groove has a first axial face 16 formed in the first part 11 that is connected by an optional radius 17 to a perpendicularly disposed inside cylindrical surface 18. A second axial face 19 is formed in the second part 13 that faces the first axial face 16. A gap 20 can be seen between the first and second parts. It is this gap 20 that must be sealed by the seal such that any fluid inside the first and second parts does not escape outwardly.

FIGURE 3 is a front view of a first embodiment of a composite seal 30a of the present invention and FIGURE 4 is an enlarged sectional view of the structure of FIG. 3 taken along lines 4-4. FIGURE 7 is a sectional view of the composite seal of FIG. 4 installed within the structure of FIG. 2. The composite seal 30a is configured to be disposed within the inside annular groove 15 to seal the gap 20 as will be best shown later in FIG. 7. The composite seal 30a is configured to be aligned about the longitudinal axis 12 and is delimited by an inside diameter 31 opposite an outside diameter 32 connected by a first axial side 33 opposite a second axial side 34.

This embodiment shows an elastomeric seal ring 35 bonded to at least one anti-extrusion ring 36. The at least one anti-extrusion ring 36 is disposed at the second axial side configured to be placed adjacent to the gap 20 when the composite seal is disposed within the inside annular groove 15 as is best shown in FIG. 7.

In this embodiment, the at least one anti-extrusion ring 36 comprises an outer anti-extrusion ring 36a and an inner anti-extrusion ring 36b separated by an extension 37 of the elastomeric seal ring. It is noted that the outer anti-extrusion ring 36a is configured to be placed adjacent to the gap 20 when the composite seal is disposed within the inside annular groove.

The elastomeric seal ring 35 starts from the first axial side 33 and extends longitudinally along the inside and outside diameters until it reaches the at least one anti-extrusion ring 36. The elastomeric seal ring 35 includes an outside annular valley 37 formed along the outside diameter 32. The outside annular valley 37 separates a first outside sealing annular interface 38 apart from a second outside sealing annular interface 39. The first outside sealing annular interface is disposed adjacent to the first axial side. The second outside sealing annular interface is disposed adjacent to the at least one anti-extrusion ring.

The elastomeric seal ring also includes an inside annular valley 40 formed along the inside diameter. The inside annular valley separates a first inside sealing annular interface 41 apart from a second inside sealing annular interface 42. The first inside sealing annular interface is disposed adjacent to the first axial side. The second inside sealing annular interface is disposed adjacent to the at least one anti-extrusion ring.

As can be seen in FIG. 4, a transition 43 is between the first axial side and the first outside sealing annular interface. This transition is rounded. The rounded transition 43 and the left part of the outside annular valley 37 meet to form an annular edge 38. Thus, the first outside sealing annular interface 38 is the annular edge formed at the intersection of the rounded transition 43 and the outside annular valley. The second outside sealing annular interface 39 is cylindrical and aligns with the outside diameter 32. The outside diameter 32 of the second outside sealing annular interface 39 is the same as the outside diameter of the outer anti-extrusion ring 36a.

Likewise, a transition 44 is between the first axial side and the first inside sealing annular interface. This transition is also rounded. The rounded transition 44 and the left part of the inside annular valley 40 meet to form an annular edge 41. Thus, the first inside sealing annular interface 41 is the annular edge formed at the intersection of the rounded transition 44 and the inside annular valley. The second inside sealing annular interface 42 is cylindrical and aligns with the inside diameter 31. The inside diameter 31 of the second inside sealing annular interface 42 is the same as the inside diameter of the inner anti-extrusion ring 36b. Finally, the extension 37 of the elastomeric seal ring at least partially extends beyond the second axial side 34 of the first and second anti-extrusion rings. This extension distance is noted as numeral 45.

As shown in FIG. 4, both the outer anti-extrusion ring 36a and the inner anti-extrusion ring 36b are bonded to the extension 37 of the elastomeric seal ring. To facilitate a good bonding and to increase reliability the annular corners of the extension 37 each have an annular radius 47a and 47b.

FIGURE 5 is a front view of a second embodiment of a composite seal 30b of the present invention and FIGURE 6 is an enlarged sectional view of the structure of FIG. 5 taken along lines 6-6. FIGURE 8 is a sectional view of the composite seal of FIG. 6 installed within the structure of FIG. 2. The structure shown in FIGS. 5 and 6 is very similar to FIGS. 3 and 4, but differs in structure as now described.

First, the at least one anti-extrusion ring 36 is a single structure. Second, the contour of the inner diameter of the elastomeric seal ring IS different. Now, the first inside sealing annular interface 41 is cylindrical. Furthermore, the first inside sealing annular interface 41 has a larger diameter in comparison to the inside diameter 31. It will be understood by those skilled in the art that the first inside sealing annular interface 41 could also have a similar diameter (not shown) in comparison to the inside diameter 31 or even a smaller diameter (not shown) in comparison to the inside diameter 31.

As can be seen in FIG. 6, the first axial side 33 is angled. Therefore, the first axial side comprises an annular angle 46 with respect to the longitudinal axis 12. The annular angle forms the first axial side that is frustoconical in shape and that is sloped downwards towards the outside diameter 32. It will also be understood by those skilled in the art that the first axial side 33 may also be perpendicular (not shown) to the longitudinal axis.

In these embodiments, the elastomeric seal ring and the at least one anti-extrusion ring are formed of different materials. Additionally, the at least one anti-extrusion ring may be formed of a material having a greater rigidity in comparison to the elastomeric seal ring. In other words, the elastomeric seal ring may have a lower modulus of elasticity in comparison to the at least one anti-extrusion ring. Alternatively, the elastomeric seal ring and the at least one anti-extrusion ring may be formed of the same materials.

The inventors have disclosed two different embodiments that are improvements over the prior art. Prior art seal designs will experience hardware swelling due to the high pressures inside the various tubes and parts of the swivel seal assembly. The present invention allows the seal to maintain sufficient sealing force across the range of part rotations. Specifically, the present invention accommodates a larger tolerance range of gland (inside annular groove 15) width compared to prior art designs. In the present invention, the outer diameter and inner diameter of the elastomer allow for compression in the smallest groove width while also allowing sufficient sealing force at the widest groove width. For example, at the widest groove width, the contour of the inner diameter surface allows for the fluid to energize the seal for increased contact force between the seal and the hardware to offset the reduced squeeze force cause by the widest groove. Said differently, the region of minimal thickness located at the rounded valleys where the thickness of the seal body is a minimum, allows compressibility and increases the seal's ability across a range of axial groove widths. Additionally, bonding the elastomer and polymer backup ring(s) allows simpler installation and reduces the likelihood of leakage occurring between the elastomer and the backup ring. Finally, one of the major failure modes of previous failed designs was because of excessive wear. Therefore, the backup ring(s) material of the present invention will be comprised of low friction and robust material to withstand oscillatory vibrations that the swivel seal assembly produces.

Although several embodiments have been described in detail for purposes of illustration, various modifications may be made to each without departing from the scope of the invention. Accordingly, the invention is not to be limited, except as by the appended claims.

## Claims

1. A composite seal (30a; 30b) configured for a swivel seal assembly (10), the swivel seal assembly (10) having a first part (11) rotatable about a longitudinal axis (12) in comparison to a second part (13), wherein the first and second parts (11, 13) cooperatively form an inside annular groove (15) disposed between the first and second parts (11, 13), the inside annular groove (15) being cylindrically-shaped and aligned about the longitudinal axis (12), wherein a gap (20) between the first and second parts (11, 13) is connected to the inside annular groove (15), wherein the composite seal (30a; 30b) is configured to be disposed within the inside annular groove (15) to seal the gap (20), wherein the composite seal (30a; 30b) is configured to be aligned about the longitudinal axis (12) and is delimited by an inside diameter (31) opposite an outside diameter (32) connected by a first axial side (33) opposite a second axial side (34), wherein the composite seal (30a; 30b) comprises:
an elastomeric seal ring (35) bonded to at least one anti-extrusion ring (36), wherein the at least one anti-extrusion ring (36) is disposed at the second axial side (34) configured to be placed adjacent to the gap (20) when the composite seal (30a; 30b) is disposed within the inside annular groove (15);
wherein the elastomeric seal ring (35) starts from the first axial side (33) and extends longitudinally along the inside and outside diameters (31. 32) until it reaches the at least one anti-extrusion ring (36);
**characterized in that**
the elastomeric seal ring (35) includes an outside annular valley (37) formed along the outside diameter (32), the outside annular valley (37) separating a first outside sealing annular interface (38) apart from a second outside sealing annular interface (39), the first outside sealing annular interface (38) disposed adjacent to the first axial side (33) and the second outside sealing annular interface (39) disposed adjacent to the at least one anti-extrusion ring (36); and
the elastomeric seal ring (35) includes an inside annular valley (40) formed along the inside diameter (31), the inside annular valley (40) separating a first inside sealing annular interface (41) apart from a second inside sealing annular interface (42), the first inside sealing annular interface (41) disposed adjacent to the first axial side (33) and the second inside sealing annular interface (42) disposed adjacent to the at least one anti-extrusion ring (36),
wherein the first axial side (33) comprises an annular angle (46) with respect to the longitudinal axis (12), the annular angle (46) forming the first axial side (33) that is frustoconical in shape that is sloped downwards towards the outside diameter (32), or wherein the at least one anti-extrusion ring (36) comprises an outer anti-extrusion ring (36a) and an inner anti-extrusion ring (36b) separated by an extension **(48)** of the elastomeric seal ring (35), wherein the outer anti-extrusion ring (36a) is configured to be placed adjacent to the gap (20) when the composite seal (30a) is disposed within the inside annular groove (15), wherein the extension **(48)** of the elastomeric seal ring (35) at least partially extends a distance (45) beyond the second axial side (34) of the **outer** and **inner** anti-extrusion rings **(36a, 36b).**

2. The composite seal of claim 1, wherein a transition (43) between the first axial side (33) and the first outside sealing annular interface (38) is rounded and, preferably, the first outside sealing annular interface (38) is an annular edge formed at an intersection of the rounded transition (43) and the outside annular valley (37).

3. The composite seal of claim 1, wherein the second outside sealing annular interface (39) is cylindrical and aligns with the outside diameter (32).

4. The composite seal of claim 1, wherein a transition (44) between the first axial side (33) and the first inside sealing annular interface (41) is rounded and, preferably, the first inside sealing annular interface (41) is an annular edge formed at an intersection of the rounded transition (44) and the inside annular valley (40).

5. The composite seal of claim 1, wherein the second inside sealing annular interface (42) is cylindrical and aligns with the inside diameter (31).

6. The composite seal of claim 1, wherein the first inside sealing annular interface (41) is cylindrical and has a larger diameter in comparison to the inside diameter (31).

7. The composite seal of claim 1, wherein the elastomeric seal ring (35) and the at least one anti-extrusion ring (36) are formed of different materials.

8. The composite seal of claim 1, wherein the elastomeric seal ring (35) has a lower modulus of elasticity in comparison to the at least one anti-extrusion ring (36).

9. The composite seal of claim 1, wherein the at least one anti-extrusion ring (36) is formed from any of the following materials: metal, stainless steel or polyether ether ketone (PEEK).

10. The composite seal of claim 1, wherein the at least one anti-extrusion ring (36) is formed of a material having a greater rigidity in comparison to the elastomeric seal ring (35).

11. Swivel seal assembly (10), comprising a first part (11) rotatable about a longitudinal axis (12) in comparison to a second part (13), wherein the first and second parts (11, 13) cooperatively form an inside annular groove (15) disposed between the first and second parts (11, 13), the inside annular groove (15) being cylindrically-shaped and aligned about the longitudinal axis (12), wherein a gap (20) between the first and second parts (11, 13) is connected to the inside annular groove (15), and comprising the composite seal (30a, 30b) of one of the preceding claims, wherein the composite seal (30a; 30b) is disposed within the inside annular groove (15) to seal the gap (20), wherein the composite seal (30a; 30b) is aligned about the longitudinal axis (12) and is delimited by an inside diameter (31) opposite an outside diameter (32) connected by a first axial side (33) opposite a second axial side (34).

## Patentansprüche

1. Verbunddichtung (30a; 30b), die für eine Drehdichtungsanordnung (10) ausgebildet ist, wobei die Drehdichtungsanordnung (10) ein erstes Teil (11) aufweist, das im Verhältnis zu einem zweiten Teil (13) um eine Längsachse (12) drehbar ist, wobei das erste und das zweite Teil (11, 13) gemeinsam eine innere ringförmige Nut (15) bilden, die zwischen dem ersten und dem zweiten Teil (11, 13) angeordnet ist, wobei die innere ringförmige Nut (15) zylinderförmig ausgebildet und um die Längsachse (12) ausgerichtet ist, wobei ein Spalt (20) zwischen dem ersten und dem zweiten Teil (11, 13) mit der inneren ringförmigen Nut (15) verbunden ist, wobei die Verbunddichtung (30a; 30b) so ausgebildet ist, dass sie innerhalb der inneren ringförmigen Nut (15) angeordnet ist, um den Spalt (20) abzudichten, wobei die Verbunddichtung (30a; 30b) so ausgebildet ist, dass sie um die Längsachse (12) ausgerichtet ist und durch einen Innendurchmesser (31) gegenüber einem Außendurchmesser (32), verbunden durch eine erste axiale Seite (33) gegenüber einer zweiten axialen Seite (34), begrenzt wird, wobei die Verbunddichtung (30a; 30b) umfasst:
einen elastomeren Dichtungsring (35), der mit mindestens einem Anti-Extrusionsring (36) verbunden ist, wobei der mindestens eine Anti-Extrusionsring (36) an der zweiten axialen Seite (34) angeordnet ist, die so ausgebildet ist, dass sie an den Spalt (20) angrenzt, wenn die Verbunddichtung (30a; 30b) in der inneren ringförmigen Nut (15) angeordnet ist;
wobei der elastomere Dichtungsring (35) an der ersten axialen Seite (33) beginnt und sich in Längsrichtung entlang des Innen- und
Außendurchmessers (31, 32) erstreckt, bis er den mindestens einen Anti-Extrusionsring (36) erreicht;
**dadurch gekennzeichnet, dass**
der elastomere Dichtungsring (35) eine entlang des Außendurchmessers (32) ausgebildete, äußere ringförmige Vertiefung (37) aufweist, wobei die äußere ringförmige Vertiefung (37) eine erste äußere ringförmige Dichtungsschnittstelle (38) von einer zweiten äußeren ringförmigen Dichtungsschnittstelle (39) trennt, wobei die erste äußere ringförmige Dichtungsschnittstelle (38) benachbart zur ersten axialen Seite (33) angeordnet ist und die zweite äußere ringförmige Dichtungsschnittstelle (39) benachbart zu dem mindestens einen Anti-Extrusionsring (36) angeordnet ist; und
der elastomere Dichtungsring (35) eine entlang des Innendurchmessers (31) ausgebildete, innere ringförmige Vertiefung (40) aufweist, wobei die innere ringförmige Vertiefung (40) eine erste innere ringförmige Dichtungsschnittstelle (41) von einer zweiten inneren ringförmigen Dichtungsschnittstelle (42) trennt, wobei die erste innere ringförmige Dichtungsschnittstelle (41) benachbart zur ersten axialen Seite (33) angeordnet ist und die zweite innere ringförmige Dichtungsschnittstelle (42) benachbart zu dem mindestens einen Anti-Extrusionsring (36) angeordnet ist,
wobei die erste axiale Seite (33) einen ringförmigen Winkel (46) in Bezug auf die Längsachse (12) aufweist, wobei der ringförmige Winkel (46) die erste axiale Seite (33) bildet, die eine kegelstumpfförmige Form aufweist, welche nach unten in Richtung des Außendurchmessers (32) abfällt,
oder
wobei der mindestens eine Anti-Extrusionsring (36) einen äußeren Anti-Extrusionsring (36a) und einen inneren Anti-Extrusionsring (36b) umfasst, die durch eine Verlängerung (48) des elastomeren Dichtungsrings (35) voneinander getrennt sind, wobei der äußere Anti-Extrusionsring (36a) so ausgebildet ist, dass er an den Spalt (20) angrenzt, wenn die Verbunddichtung (30a) in der inneren ringförmigen Nut (15) angeordnet ist, wobei sich die Verlängerung (48) des elastomeren Dichtungsrings (35) zumindest teilweise um eine Strecke (45) über die zweite axiale Seite (34) des äußeren und des inneren Anti-Extrusionsrings (36a, 36b) hinaus erstreckt.

2. Verbunddichtung nach Anspruch 1, wobei ein Übergang (43) zwischen der ersten axialen Seite (33) und der ersten äußeren ringförmigen Dichtungsschnittstelle (38) abgerundet ist und vorzugsweise die erste äußere ringförmige Dichtungsschnittstelle (38) eine ringförmige Kante ist, die an einer Schnittstelle des abgerundeten Übergangs (43) und der äußeren ringförmigen Vertiefung (37) gebildet ist.

3. Verbunddichtung nach Anspruch 1, wobei die zweite äußere ringförmige Dichtungsschnittstelle (39) zylindrisch ist und mit dem Außendurchmesser (32) fluchtet.

4. Verbunddichtung nach Anspruch 1, wobei ein Übergang (44) zwischen der ersten axialen Seite (33) und der ersten inneren ringförmigen Dichtungsschnittstelle (41) abgerundet ist und vorzugsweise die erste innere ringförmige Dichtungsschnittstelle (41) eine ringförmige Kante ist, die an einer Schnittstelle des abgerundeten Übergangs (44) und der inneren ringförmigen Vertiefung (40) gebildet ist.

5. Verbunddichtung nach Anspruch 1, wobei die zweite innere ringförmige Dichtungsschnittstelle (42) zylindrisch ist und mit dem Innendurchmesser (31) fluchtet.

6. Verbunddichtung nach Anspruch 1, wobei die erste innere ringförmige Dichtungsschnittstelle (41) zylindrisch ist und im Vergleich zum Innendurchmesser (31) einen größeren Durchmesser aufweist.

7. Verbunddichtung nach Anspruch 1, wobei der elastomere Dichtungsring (35) und der mindestens eine Anti-Extrusionsring (36) aus unterschiedlichen Materialien gebildet sind.

8. Verbunddichtung nach Anspruch 1, wobei der elastomere Dichtungsring (35) im Vergleich zu dem mindestens einen Anti-Extrusionsring (36) ein niedrigeres Elastizitätsmodul aufweist.

9. Verbunddichtung nach Anspruch 1, wobei der mindestens eine Anti-Extrusionsring (36) aus einem der folgenden Materialien gebildet ist: Metall, Edelstahl oder Polyetheretherketon (PEEK).

10. Verbunddichtung nach Anspruch 1, wobei der mindestens eine Anti-Extrusionsring (36) aus einem Material gebildet ist, das im Vergleich zum elastomeren Dichtungsring (35) eine größere Steifigkeit aufweist.

11. Drehdichtungsanordnung (10), umfassend ein erstes Teil (11), das um eine Längsachse (12) im Verhältnis zu einem zweiten Teil (13) drehbar ist, wobei das erste und das zweite Teil (11, 13) gemeinsam eine innere ringförmige Nut (15) bilden, die zwischen dem ersten und dem zweiten Teil (11, 13) angeordnet ist, wobei die innere ringförmige Nut (15) zylindrisch geformt und um die Längsachse (12) ausgerichtet ist, wobei ein Spalt (20) zwischen dem ersten und dem zweiten Teil (11, 13) mit der inneren ringförmigen Nut (15) verbunden ist, und umfassend die Verbunddichtung (30a, 30b) nach einem der vorhergehenden Ansprüche, wobei die Verbunddichtung (30a; 30b) innerhalb der inneren ringförmigen Nut (15) angeordnet ist, um den Spalt (20) abzudichten, wobei die Verbunddichtung (30a; 30b) um die Längsachse (12) ausgerichtet ist und durch einen Innendurchmesser (31) gegenüber einem Außendurchmesser (32), verbunden durch eine erste axiale Seite (33) gegenüber einer zweiten axialen Seite (34), begrenzt ist.

## Revendications

1. Joint composite (30a ; 30b) configuré pour un ensemble de joint rotatif (10), l'ensemble de joint rotatif (10) comprenant une première partie (11) rotative autour d'un axe longitudinal (12) par rapport à une seconde partie (13), dans lequel la première et la seconde parties (11, 13) forment ensemble une rainure annulaire interne (15) disposée entre la première et la seconde parties (11, 13), la rainure annulaire interne (15) étant de forme cylindrique et alignée autour de l'axe longitudinal (12), dans lequel un espace (20) entre la première et la seconde parties (11, 13) est connecté à la rainure annulaire interne (15), dans lequel le joint composite (30a ; 30b) est configuré pour être disposé dans la rainure annulaire interne (15) afin d'étancher l'espace (20), dans lequel le joint composite (30a ; 30b) est configuré pour être aligné autour de l'axe longitudinal (12) et est délimité par un diamètre interne (31) opposé à un diamètre externe (32) connecté par un premier côté axial (33) opposé à un second côté axial (34), dans lequel le joint composite (30a ; 30b) comprend :
un anneau d'étanchéité élastomère (35) lié à au moins un anneau anti-extrusion (36), dans lequel le ou les anneaux anti-extrusion (36) sont disposés au second côté axial (34) configuré pour être placé adjacent à l'espace (20) lorsque le joint composite (30a ; 30b) est disposé dans la rainure annulaire interne (15) ;
dans lequel l'anneau d'étanchéité élastomère (35) commence à partir du premier côté axial (33) et s'étend longitudinalement le long des diamètres interne et externe (31, 32) jusqu'à atteindre le ou les anneaux anti-extrusion (36) ;
**caractérisé en ce que**
l'anneau d'étanchéité élastomère (35) comprend une vallée annulaire externe (37) formée le long du diamètre externe (32), la vallée annulaire externe (37) séparant une interface annulaire d'étanchéité externe première (38) d'une interface annulaire d'étanchéité externe seconde (39), l'interface annulaire d'étanchéité externe première (38) disposée adjacent au premier côté axial (33) et l'interface annulaire d'étanchéité externe seconde (39) disposée adjacent à l'anneau ou aux anneaux anti-extrusion (36) ; et
l'anneau d'étanchéité élastomère (35) comprend une vallée annulaire interne (40) formée le long du diamètre interne (31), la vallée annulaire interne (40) séparant une interface annulaire d'étanchéité interne première (41) d'une interface annulaire d'étanchéité interne seconde (42), l'interface annulaire d'étanchéité interne première (41) disposée adjacent au premier côté axial (33) et l'interface annulaire d'étanchéité interne seconde (42) disposée adjacent à l'anneau ou aux anneaux anti-extrusion (36),
dans lequel le premier côté axial (33) comprend un angle annulaire (46) par rapport à l'axe longitudinal (12), l'angle annulaire (46) formant le premier côté axial (33) qui est de forme tronconique et incliné vers le bas en direction du diamètre externe (32), ou
dans lequel le ou les anneaux anti-extrusion (36) comprennent un anneau anti-extrusion externe (36a) et un anneau anti-extrusion interne (36b) séparés par une extension (48) de l'anneau d'étanchéité élastomère (35), dans lequel l'anneau anti-extrusion externe (36a) est configuré pour être placé adjacent à l'espace (20) lorsque le joint composite (30a) est disposé dans la rainure annulaire interne (15), dans lequel l'extension (48) de l'anneau d'étanchéité élastomère (35) s'étend au moins partiellement sur une distance (45) au-delà du second côté axial (34) des anneaux anti-extrusion externe et interne (36a, 36b).

2. Joint composite selon la revendication 1, dans lequel une transition (43) entre le premier côté axial (33) et l'interface annulaire d'étanchéité externe première (38) est arrondie et, de préférence, l'interface annulaire d'étanchéité externe première (38) est un bord annulaire formé à l'intersection de la transition arrondie (43) et de la vallée annulaire externe (37).

3. Joint composite selon la revendication 1, dans lequel l'interface annulaire d'étanchéité externe seconde (39) est cylindrique et alignée avec le diamètre externe (32).

4. Joint composite selon la revendication 1, dans lequel une transition (44) entre le premier côté axial (33) et l'interface annulaire d'étanchéité interne première (41) est arrondie et, de préférence, l'interface annulaire d'étanchéité interne première (41) est un bord annulaire formé à l'intersection de la transition arrondie (44) et de la vallée annulaire interne (40).

5. Joint composite selon la revendication 1, dans lequel l'interface annulaire d'étanchéité interne seconde (42) est cylindrique et alignée avec le diamètre interne (31).

6. Joint composite selon la revendication 1, dans lequel l'interface annulaire d'étanchéité interne première (41) est cylindrique et possède un diamètre supérieur par rapport au diamètre interne (31).

7. Joint composite selon la revendication 1, dans lequel l'anneau d'étanchéité élastomère (35) et le ou les anneaux anti-extrusion (36) sont formés de matériaux différents.

8. Joint composite selon la revendication 1, dans lequel l'anneau d'étanchéité élastomère (35) possède un module d'élasticité inférieur par rapport au ou aux anneaux anti-extrusion (36).

9. Joint composite selon la revendication 1, dans lequel le ou les anneaux anti-extrusion (36) sont formés à partir de l'un des matériaux suivants : métal, acier inoxydable ou polyétheréthercétone (PEEK).

10. Joint composite selon la revendication 1, dans lequel le ou les anneaux anti-extrusion (36) sont formés d'un matériau ayant une rigidité supérieure par rapport à l'anneau d'étanchéité élastomère (35).

11. Ensemble de joint rotatif (10), comprenant une première partie (11) rotative autour d'un axe longitudinal (12) par rapport à une seconde partie (13), dans lequel la première et la seconde parties (11, 13) forment ensemble une rainure annulaire interne (15) disposée entre la première et la seconde parties (11, 13), la rainure annulaire interne (15) étant de forme cylindrique et alignée autour de l'axe longitudinal (12), dans lequel un espace (20) entre la première et la seconde parties (11, 13) est connecté à la rainure annulaire interne (15), et comprenant le joint composite (30a, 30b) selon l'une quelconque des revendications précédentes, dans lequel le joint composite (30a ; 30b) est disposé dans la rainure annulaire interne (15) afin d'étancher l'espace (20), dans lequel le joint composite (30a ; 30b) est aligné autour de l'axe longitudinal (12) et est délimité par un diamètre interne (31) opposé à un diamètre externe (32) connecté par un premier côté axial (33) opposé à un second côté axial (34).
